# EUROPÄISCHE PATENTANMELDUNG

(11) **EP 3 467 463 A1**
(43) Veröffentlichungstag der Anmeldung: **10.04.2019**
(21) Anmeldenummer: 17465556.3
(22) Anmeldetag: 05.10.2017
(51) Int. Cl.: G01L 3/08

(54) **BESTIMMEN EINES TORSIONSMOMENTS**

(71) Anmelder: Conti Temic microelectronic GmbH, 90411 Nürnberg (DE)
(72) Erfinder: AMARIEI, Cornel Marian, 087075 Floresti (RO); CZIRJAK, Cristian, 557185 Poplaca (RO)
(74) Vertreter: Maier, Stefan Josef

(57) **Zusammenfassung**

Die Erfindung betrifft einen Torsionssensor (1) zum Bestimmen eines auf ein Objekt (3) wirkenden Torsionsmoments. Der Torsionssensor (1) umfasst eine Strahlungsquelle (7) und einen Strahlungsdetektor (9), die voneinander beabstandet an dem Objekt (3) angeordnet sind. Die Strahlungsquelle (7) strahlt ein Strahlungsbündel (13) elektromagnetischer Strahlung zu dem Strahlungsdetektor (9) ab. Der Strahlungsdetektor (9) erfasst wenigstens eine von einem Auftreffbereich (17), in dem das Strahlungsbündel (13) den Strahlungsdetektor (9) trifft, abhängige Messgröße.

## Beschreibung

Die Erfindung betrifft einen Torsionssensor und ein Verfahren zum Bestimmen eines auf ein Objekt wirkenden Torsionsmoments.

Bekannte Torsionssensoren zum Bestimmen eines auf ein Objekt wirkenden Torsionsmoments weisen häufig einen mit dem Objekt verbundenen Messkörper auf, dessen Form sich bei einer Torsion des Objekts ändert. Die Formänderung des Objekts wird erfasst und zum Bestimmen des Torsionsmoments ausgewertet. Häufig werden beispielsweise Dehnungsmessstreifen als Messkörper verwendet.

Der Erfindung liegt die Aufgabe zugrunde, einen verbesserten Torsionssensor und ein verbessertes Verfahren zum Bestimmen eines auf ein Objekt wirkenden Torsionsmoments anzugeben.

Die Aufgabe wird erfindungsgemäß durch einen Torsionssensor mit den Merkmalen des Anspruchs 1 und durch ein Verfahren mit den Merkmalen des Anspruchs 11 gelöst.

Vorteilhafte Ausgestaltungen der Erfindung sind Gegenstand der Unteransprüche.

Ein erfindungsgemäßer Torsionssensor zum Bestimmen eines auf ein Objekt wirkenden Torsionsmoments umfasst eine Strahlungsquelle und einen Strahlungsdetektor, die voneinander beabstandet an dem Objekt angeordnet sind. Die Strahlungsquelle strahlt ein Strahlungsbündel elektromagnetischer Strahlung zu dem Strahlungsdetektor ab. Der Strahlungsdetektor erfasst wenigstens eine von einem Auftreffbereich, in dem das Strahlungsbündel den Strahlungsdetektor trifft, abhängige Messgröße.

Die Erfindung nutzt aus, dass durch eine Torsion des Objekts die Positionen der Strahlungsquelle und des Strahlungsdetektors relativ zueinander gedreht werden. Durch diese relative Drehung wird der Auftreffbereich, in dem das Strahlungsbündel den Strahlungsdetektor trifft, verschoben. Die Verschiebung des Auftreffbereichs nimmt mit zunehmender Torsion des Objekts und somit mit zunehmendem Torsionsmoment zu. Dies ermöglicht die Bestimmung des Torsionsmoments durch eine Erfassung und Auswertung einer von dem Auftreffbereich abhängigen Messgröße. Da die Erfindung im Wesentlichen lediglich die Erfassung und Auswertung der von dem Auftreffbereich abhängigen Messgröße oder Messgrößen erfordert, ermöglicht sie eine relativ einfache Herstellung des Torsionssensors, die die Herstellungskosten des Torsionssensors gegenüber den Herstellungskosten bekannter Torsionssensoren deutlich reduziert. Der direkte Zusammenhang zwischen der Verschiebung des Auftreffbereiches und dem Torsionsmoment ermöglicht ferner eine präzise und unabhängig von der momentanen Lage des Objekts durchführbare Bestimmung des Torsionsmoments aus der Verschiebung des Auftreffbereiches beziehungsweise der davon abhängigen Messgröße oder Messgrößen. Da das Torsionsmoment durch einen optischen Sensor bestimmt wird, arbeitet der Torsionssensor zudem im Wesentlichen verschleißfrei.

Eine Ausgestaltung der Erfindung sieht vor, dass die Strahlungsquelle das Strahlungsbündel in eine Strahlungsrichtung abstrahlt, die zumindest annähernd parallel zu einer Torsionsmomentrichtung des Torsionsmoments ist. Dadurch wird die Bestrahlungsstärke des Auftreffbereiches vorteilhaft optimiert.

Eine weitere Ausgestaltung der Erfindung sieht vor, dass der Strahlungsdetektor zwei nebeneinander angeordnete Detektorflächen aufweist, die mit dem Strahlungsbündel bestrahlt werden, wobei ein Anteil des Strahlungsbündels, der eine Detektorfläche trifft, von der Torsion des Objekts abhängt, und dass der Strahlungsdetektor für jede Detektorfläche eine Strahlungsleistung des auf die Detektorfläche auftreffenden Anteils des Strahlungsbündels erfasst. Diese Ausgestaltung der Erfindung nutzt aus, dass eine Verschiebung des Auftreffbereichs die auf die Detektorflächen auftreffenden Strahlungsleistungen relativ zueinander ändert. Daher kann aus den relativen Strahlungsleistungen der Auftreffbereich beziehungsweise das Torsionsmoment ermittelt werden.

Eine weitere Ausgestaltung der Erfindung sieht vor, dass der Strahlungsdetektor eine Vielzahl nebeneinander angeordneter Detektorflächen aufweist und das Strahlungsbündel eine von der Torsion des Objekts abhängige Untermenge der Detektorflächen trifft, und dass der Strahlungsdetektor die von dem Strahlungsbündel getroffene Untermenge der Detektorflächen erfasst. Beispielsweise erfasst der Strahlungsdetektor für jede Detektorfläche, ob eine Strahlungsleistung der auf die Detektorfläche auftreffenden elektromagnetischen Strahlung einen vorgegebenen Leistungsschwellenwert überschreitet. Bei dieser Ausgestaltung der Erfindung wird ermittelt, welche Detektorfläche oder Detektorflächen jeweils momentan von dem Strahlungsbündel bestrahlt werden, um aus der Position dieser Detektorfläche oder Detektorflächen den Auftreffbereich des Strahlungsbündels beziehungsweise das Torsionsmoment zu ermitteln. Dazu ist keine Erfassung der absoluten oder relativen Strahlungsleistungen für die einzelnen Detektorflächen erforderlich, sondern es genügt zu erfassen, ob die jeweiligen Strahlungsleistungen einen vorgegebenen Leistungsschwellenwert überschreiten.

Eine weitere Ausgestaltung der Erfindung sieht vor, dass die elektromagnetische Strahlung des Strahlungsbündels linear polarisiert ist und der Strahlungsdetektor zwei voneinander beabstandete Linearpolarisatoren aufweist, die sich voneinander durch die Polarisationsrichtungen der von ihnen herausgefilterten elektromagnetischen Strahlung unterscheiden und von dem Strahlungsbündel bestrahlt werden, und dass der Strahlungsdetektor für jeden Linearpolarisator eine Strahlungsleistung der von dem Linearpolarisator herausgefilterten elektromagnetischen Strahlung erfasst. Beispielsweise unterscheiden sich die Polarisationsrichtungen der von den Linearpolarisatoren herausgefilterten elektromagnetischen Strahlung um 90 Grad voneinander. Bei diesem Ausführungsbeispiel der Erfindung wird ausgenutzt, dass eine Torsion des Objekts die Stellungen der Linearpolarisatoren des Strahlungsdetektors relativ zu der Polarisationsrichtung des Strahlungsbündels verändert. Dadurch ändern sich wiederum die Strahlungsleistungen der von den Linearpolarisatoren des Strahlungsdetektors jeweils herausgefilterten elektromagnetischen Strahlungen relativ zueinander. Durch die Auswertung dieser Strahlungsleistungen können daher die Torsion des Objekts und das Torsionsmoment ermittelt werden.

Eine weitere Ausgestaltung der Erfindung sieht ein Gehäuse vor, das die Strahlungsquelle und den Strahlungsdetektor umgibt. Dabei kann zumindest ein Bereich des Gehäuses, in dem das Strahlungsbündel verläuft, mit einem für die von der Strahlungsquelle abgestrahlte elektromagnetische Strahlung durchlässigen Gel befüllt sein. Diese Ausgestaltung der Erfindung ermöglicht, die Strahlungsquelle und den Strahlungsdetektor durch das Gehäuse vor störenden oder schädigenden Umgebungseinflüssen einer Umgebung des Torsionssensors zu schützen. Durch eine Befüllung eines Bereichs des Gehäuses, in dem das Strahlungsbündel verläuft, können ferner Staub, kleine Partikel und/oder kleine Teile, die sich von dem Torsionssensor, beispielsweise infolge von Abnutzung, lösen, von dem Strahlungsbündel ferngehalten werden.

Eine weitere Ausgestaltung der Erfindung sieht ein kabelloses Übertragungssystem zum kabellosen Senden von Messdaten, die von dem Strahlungsdetektor erfasst werden, zu einer externen Empfangseinheit und/oder zum kabellosen Empfangen von Energie von einer externen Energiequelle vor. Diese Ausgestaltung der Erfindung ermöglicht eine flexible und aufwandsarme Übertragung von Messdaten des Strahlungsdetektors zu einer externen Empfangseinheit und/oder von Energie zu dem Torsionssensor.

Bei dem erfindungsgemäßes Verfahren zum Bestimmen eines auf ein Objekt wirkenden Torsionsmoments werden unter Verwendung eines erfindungsgemäßen Torsionssensors von der Strahlungsquelle des Torsionssensors ein Strahlungsbündel elektromagnetischer Strahlung zu dem Strahlungsdetektor des Torsionssensors abgestrahlt und von dem Strahlungsdetektor wenigstens eine von dem Auftreffbereich, in dem das Strahlungsbündel den Strahlungsdetektor trifft, abhängige Messgröße erfasst, und anhand der wenigstens einen Messgröße wird das auf das Objekt wirkende Torsionsmoment bestimmt. Die Vorteile des erfindungsgemäßen Verfahrens ergeben sich aus den oben genannten Vorteilen eines erfindungsgemäßen Torsionssensors.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 eine perspektivische Darstellung eines ersten Ausführungsbeispiels eines Torsionssensors,
FIG 2 eine Frontansicht eines Strahlungsdetektors des in Figur 1 dargestellten Torsionssensors,
FIG 3 ein Blockdiagramm des in Figur 1 dargestellten Torsionssensors,
FIG 4 eine perspektivische Darstellung eines zweiten Ausführungsbeispiels eines Torsionssensors,
FIG 5 eine Frontansicht eines Strahlungsdetektors des in Figur 4 dargestellten Torsionssensors,
FIG 6 ein Blockdiagramm des in Figur 4 dargestellten Torsionssensors,
FIG 7 eine perspektivische Darstellung eines dritten Ausführungsbeispiels eines Torsionssensors,
FIG 8 eine Draufsicht auf den in Figur 7 dargestellten Torsionssensor,
FIG 9 ein Blockdiagramm des in Figur 7 dargestellten Torsionssensors,
FIG 10 eine perspektivische Darstellung eines vierten Ausführungsbeispiels eines Torsionssensors,
FIG 11 ein Blockdiagramm des in Figur 10 dargestellten Torsionssensors.

Einander entsprechende Teile sind in den Figuren mit denselben Bezugszeichen versehen.

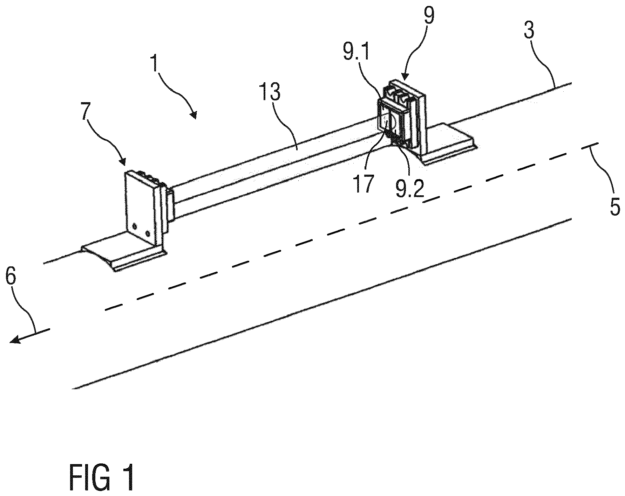

Figur 1 zeigt eine perspektivische Darstellung eines ersten Ausführungsbeispiels eines Torsionssensors 1 zum Bestimmen eines auf ein Objekt 3 wirkenden Torsionsmoments.

Das Objekt 3 ist in diesem Beispiel eine Welle mit einer Längsachse 5, die parallel zu einer Torsionsmomentrichtung 6 des Torsionsmoments ist.

Der Torsionssensor 1 umfasst eine Strahlungsquelle 7 und einen Strahlungsdetektor 9, die entlang der Torsionsmomentrichtung 6 voneinander beabstandet an einer Außenoberfläche des Objekts 3 angeordnet sind.

Die Strahlungsquelle 7 strahlt ein Strahlungsbündel 13 elektromagnetischer Strahlung in eine zu der Längsachse 5 parallelen Strahlungsrichtung zu dem Strahlungsdetektor 9 ab.

Der Strahlungsdetektor 9 weist zwei Detektorflächen 9.1, 9.2 auf, die in einer zu der Längsachse 5 senkrechten Ebene in gleichem Abstand von der Längsachse 5 nebeneinander angeordnet sind.

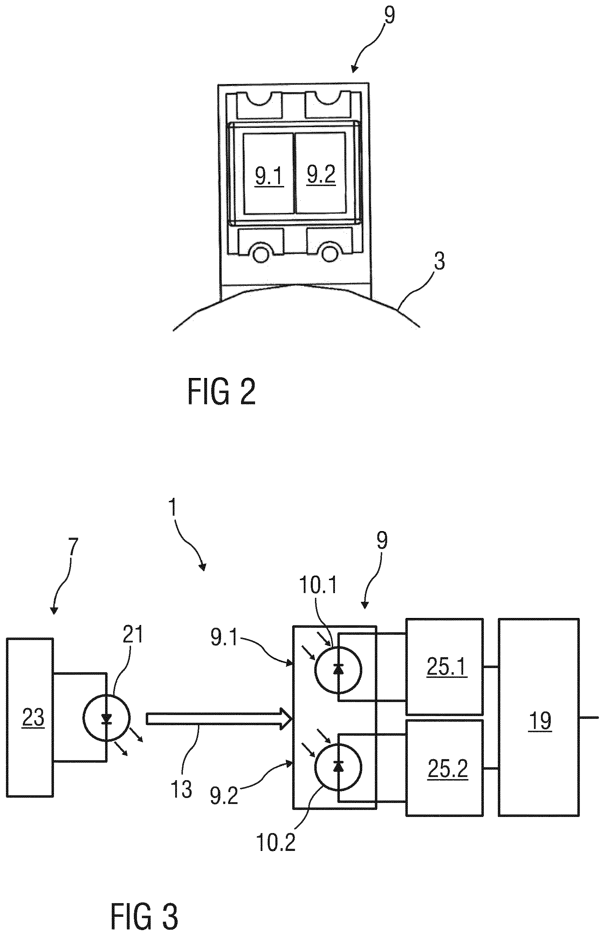

Figur 2 zeigt eine Frontansicht des Strahlungsdetektors 9 des in Figur 1 dargestellten Torsionssensors 1.

Der Strahlungsdetektor 9 und die Strahlungsquelle 7 sind derart angeordnet, dass die Strahlungsquelle 7 beide Detektorflächen 9.1, 9.2 mit wenigstens annähernd gleichen Strahlungsleistungen bestrahlt, wenn kein Torsionsmoment auf das Objekt 3 wirkt.

Der Strahlungsdetektor 9 erfasst für jede Detektorfläche 9.1, 9.2 eine Strahlungsleistung der auf die Detektorfläche 9.1, 9.2 auftreffenden elektromagnetischen Strahlung der Strahlungsquelle 7.

Wenn ein Torsionsmoment auf das Objekt 3 wirkt, werden die Strahlungsquelle 7 und der Strahlungsdetektor 9 durch die Torsion des Objekts 3 relativ zueinander auf der Außenoberfläche des Objekts 3 verschoben. Durch diese Verschiebung wird auch ein Auftreffbereich 17, in dem das Strahlungsbündel 13 den Strahlungsdetektor 9 trifft, in einer zu der Längsachse 5 senkrechten Ebene in eine zu der Außenoberfläche des Objekts 3 tangentiale Richtung verschoben. Durch die Verschiebung des Auftreffbereichs 17 ändern sich die auf die Detektorflächen 9.1, 9.2 auftreffenden Strahlungsleistungen relativ zueinander, da sich die Größen der jeweils bestrahlten Bereiche der Detektorflächen 9.1, 9. 2 relativ zueinander ändern. Da die Torsion des Objekts 3 und damit die Verschiebung des Auftreffbereichs 17 mit zunehmendem Torsionsmoment zunimmt, kann das Torsionsmoment aus der Verschiebung des Auftreffbereichs 17 beziehungsweise aus den erfassten Strahlungsleistungen ermittelt werden. Das Torsionsmoment wird mit einer Auswerteeinheit 19 (siehe Figur 3) bestimmt, die in den Strahlungsdetektor 9 integriert ist oder separat ausgeführt ist.

Figur 3 zeigt ein Blockdiagramm des in Figur 1 dargestellten Torsionssensors 1. Die Strahlungsquelle 7 weist eine Strahlungsemissionseinheit 21 und eine Versorgungseinheit 23 zur Energieversorgung der Strahlungsemissionseinheit 21 auf. Die Strahlungsemissionseinheit 21 kann beispielsweise wenigstens eine Leuchtdiode, Laserdiode oder Glühlampe aufweisen. Die Versorgungseinheit 23 kann beispielsweise als eine Batterie ausgebildet sein. Die Strahlungsquelle 7 kann außerdem eine (nicht dargestellte) optische Abbildungseinheit zur Formung des Strahlungsbündels 13 aufweisen.

Der Strahlungsdetektor 9 weist für jede Detektorfläche 9.1, 9.2 eine Detektionseinheit 10.1, 10.2 zur Erfassung der auf die Detektorfläche 9.1, 9.2 auftreffenden Strahlungsleistung auf. Beispielsweise weisen die Detektionseinheiten 10.1, 10.2 jeweils wenigstens eine Photodiode auf. Insbesondere kann jede Detektorfläche 9.1, 9.2 eine Oberfläche einer Detektionseinheit 10.1, 10.2 sein.

Der Strahlungsdetektor 9 kann ferner für jede Detektorfläche 9.1, 9.2 eine Verstärker- und/oder Filtereinheit 25.1, 25.2 zum Verstärken und/oder Filtern der von den Detektionseinheiten 10.1, 10.2 erfassten Signale aufweisen.

Die von den Detektionseinheiten 10.1, 10.2 erfassten Signale werden, gegebenenfalls über die Verstärker- und/oder Filtereinheit 25.1, 25.2, der Auswerteeinheit 19 zugeführt und von dieser ausgewertet. Vorzugsweise normalisiert die Auswerteeinheit 19 die ihr zugeführten Signale, um Umgebungseinflüsse wie Temperatur- oder Feuchtigkeitseinflüsse oder Einflüsse einer Abnutzung von Torsionssensorkomponenten auf die Signale zu reduzieren. Beispielsweise werden die Signale normalisiert, indem jeweils die Summe der für die beiden Detektorflächen 9.1, 9.2 erfassten Signale durch eine Differenz dieser Signale dividiert wird. Das Torsionsmoment wird von der Auswerteeinheit 19 aus den (gegebenenfalls normalisierten) Signalen ermittelt.

Die Auswerteeinheit 19 kann als analoge Einheit zur analogen Auswertung der Signale oder als digitale Einheit zur digitalen Auswertung der Signale ausgeführt sein. Im Fall, dass sie als digitale Einheit ausgeführt ist, werden die Signale vor ihrer Auswertung durch einen Analog-Digital-Umsetzer digitalisiert.

Das anhand von den Figuren 1 bis 3 beschriebene Ausführungsbeispiel kann dahingehend abgewandelt werden, dass der Strahlungsdetektor 9 mehr als nur zwei Detektorflächen 9.1, 9.2 aufweist. Beispielsweise kann der Strahlungsdetektor 9 vier Detektorflächen aufweisen, die in Form einer Matrix mit zwei Spalten und zwei Zeilen angeordnet sind und von der Strahlungsquelle 7 mit wenigstens annähernd gleichen Strahlungsleistungen bestrahlt werden, wenn kein Torsionsmoment auf das Objekt 3 wirkt.

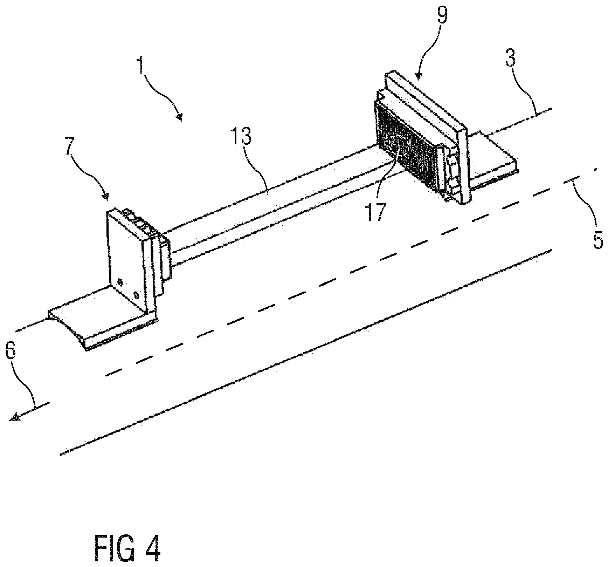

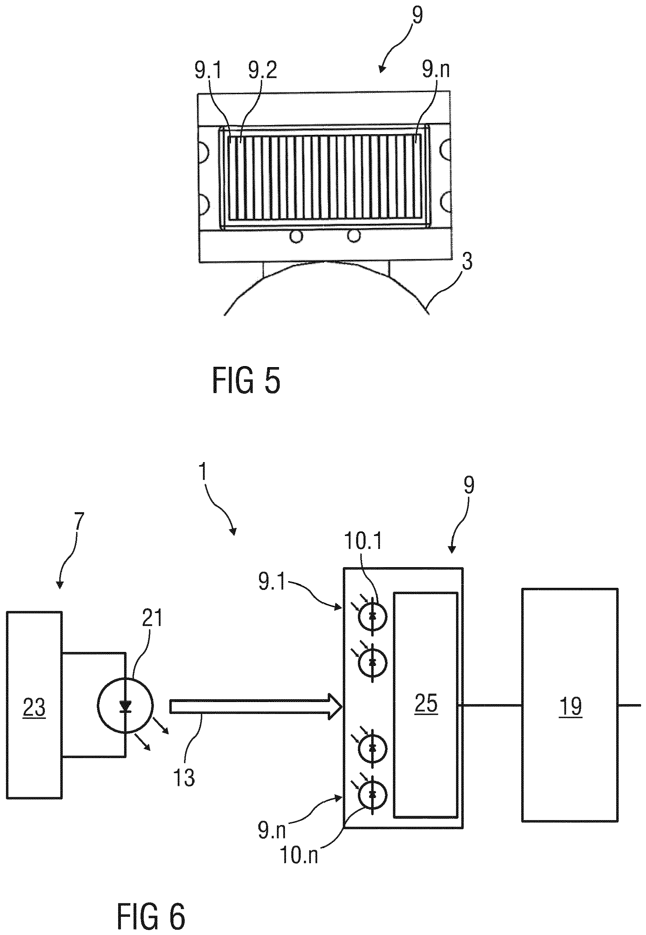

Die Figuren 4 bis 6 zeigen ein zweites Ausführungsbeispiel eines Torsionssensors 1 zum Bestimmen eines auf ein Objekt 3 wirkenden Torsionsmoments. Dabei zeigt Figur 4 eine perspektivische Darstellung des Torsionssensors 1, Figur 5 zeigt eine Frontansicht des Strahlungsdetektors 9 des Torsionssensors 1 und Figur 6 zeigt ein Blockdiagramm des Torsionssensors 1. Der Torsionssensor 1 umfasst eine Strahlungsquelle 7 und einen Strahlungsdetektor 9. Dieses Ausführungsbeispiel unterscheidet sich von dem anhand der Figuren 1 bis 3 beschriebenen Ausführungsbeispiel durch die Ausführung und Funktionsweise des Strahlungsdetektors 9.

Die Strahlungsquelle 7 und das Objekt 3 sind wie in dem anhand der Figuren 1 bis 3 beschriebenen Ausführungsbeispiel ausgeführt. Ebenfalls wie in dem anhand der Figuren 1 bis 3 beschriebenen Ausführungsbeispiel sind die Strahlungsquelle 7 und der Strahlungsdetektor 9 entlang einer Torsionsmomentrichtung 6 des Torsionsmoments, die parallel zu einer Längsachse 5 des Objekts 3 ist, voneinander beabstandet an einer Außenoberfläche des Objekts 3 angeordnet.

Der Strahlungsdetektor 9 weist eine Vielzahl von Detektorflächen 9.1 bis 9.n auf, die in einer zu der Längsachse 5 senkrechten Ebene in annähernd gleichem Abstand von der Längsachse 5 nebeneinander angeordnet sind. Der Strahlungsdetektor 9 erfasst für jede Detektorfläche 9.1 bis 9.n, ob die Strahlungsleistung der auf die Detektorfläche 9.1 bis 9.n auftreffenden elektromagnetischen Strahlung einen vorgegebenen Leistungsschwellenwert überschreitet. Daraus wird ermittelt, welche Untermenge der Detektorflächen 9.1 bis 9.n jeweils momentan von dem Strahlungsbündel 13 bestrahlt werden, um daraus auf den Auftreffbereich 17 zu schließen, in dem das Strahlungsbündel den Strahlungsdetektor 9 trifft.

Die Detektorflächen 9.1 bis 9.n sind beispielsweise die Oberflächen von Detektionseinheiten 10.1 bis 10.n, die einen Zeilensensor bilden, beispielsweise einen CCD-, CMOS- oder anderen Zeilensensor. Die Signale der Detektionseinheiten 10.1 bis 10.n werden einer Prozessoreinheit 25 zugeführt, die aus den Signalen die Untermenge der jeweils momentan von dem Strahlungsbündel 13 bestrahlten Detektorflächen 9.1 bis 9.n ermittelt und eine diese Untermenge charakterisierende Information an die Auswerteeinheit 19 sendet. Die Auswerteeinheit 19 ermittelt aus dieser Information das auf das Objekt 3 wirkende Torsionsmoment. Da bei diesem Ausführungsbeispiel für jede Detektorfläche 9.1 bis 9.n lediglich ermittelt wird, ob die Strahlungsleistung der auf die Detektorfläche 9.1 bis 9.n auftreffenden elektromagnetischen Strahlung einen vorgegebenen Leistungsschwellenwert überschreitet, wird der Auftreffbereichs 17 in diesem Ausführungsbeispiel anhand digitaler Signale ermittelt. Durch diese digitale Bestimmung des Auftreffbereichs 17 wird der Torsionssensor 1 dieses Ausführungsbeispiels durch Rausch- und Umgebungseinflüsse kaum beeinträchtigt.

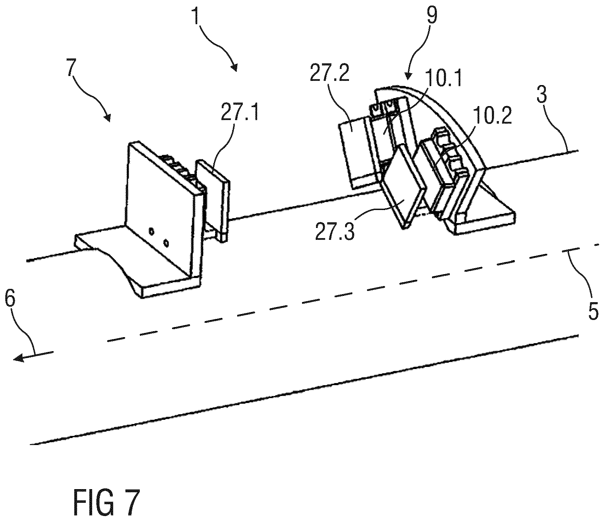

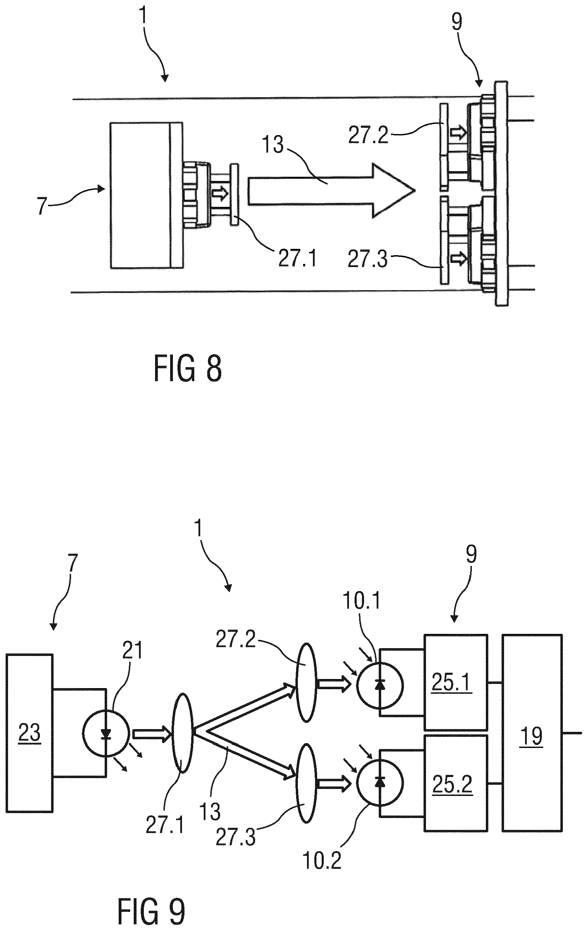

Die Figuren 7 bis 9 zeigen ein drittes Ausführungsbeispiel eines Torsionssensors 1 zum Bestimmen eines auf ein Objekt 3 wirkenden Torsionsmoments. Dabei zeigt Figur 7 eine perspektivische Darstellung des Torsionssensors 1, Figur 8 zeigt eine Draufsicht auf den Torsionssensor 1 und Figur 9 zeigt ein Blockdiagramm des Torsionssensors 1.

Der Torsionssensor 1 umfasst eine Strahlungsquelle 7 und einen Strahlungsdetektor 9, die wie in den anhand der Figuren 1 bis 6 beschriebenen Ausführungsbeispielen entlang einer Torsionsmomentrichtung 6 des Torsionsmoments, die parallel zu einer Längsachse 5 des Objekts 3 ist, voneinander beabstandet an einer Außenoberfläche des Objekts 3 angeordnet sind.

Die Strahlungsquelle 7 strahlt ein Strahlungsbündel 13 elektromagnetischer Strahlung in eine zu der Längsachse 5 parallelen Strahlungsrichtung zu dem Strahlungsdetektor 9 ab. Das Strahlungsbündel 13 wird durch einen ersten Linearpolarisator 27.1 der Strahlungsquelle 7 linear polarisiert.

Der Strahlungsdetektor 9 weist zwei voneinander beabstandete zweite Linearpolarisatoren 27.2, 27. 3 auf, die sich voneinander durch die Polarisationsrichtungen der von ihnen herausgefilterten elektromagnetischen Strahlung unterscheiden und von dem Strahlungsbündel 13 bestrahlt werden. Beispielsweise unterscheiden sich die Polarisationsrichtungen der von den zweiten Linearpolarisatoren 27.2, 27.3 herausgefilterten elektromagnetischen Strahlung um 90 Grad voneinander. Die zweiten Linearpolarisatoren 27.2, 27.3 sind in einer zu der Längsachse 5 senkrechten Ebene in gleichem Abstand von der Längsachse 5 nebeneinander angeordnet sind.

Der Strahlungsdetektor erfasst für jeden zweiten Linearpolarisator 27.2, 27.3 eine Strahlungsleistung der von dem zweiten Linearpolarisator 27.2, 27.3 herausgefilterten elektromagnetischen Strahlung. Durch eine Torsion des Objekts 3 verändern sich die Stellungen der zweiten Linearpolarisatoren 27.2, 27.3 relativ zu der Stellung des ersten Linearpolarisators 27.1. Dadurch ändern sich wiederum die Strahlungsleistungen der von den zweiten Linearpolarisatoren 27.2, 27.3 jeweils herausgefilterten elektromagnetischen Strahlungen relativ zueinander. Durch die Auswertung dieser Strahlungsleistungen können daher die Torsion des Objekts 3 und das Torsionsmoment ermittelt werden.

Zur Erfassung der Strahlungsleistungen der von den zweiten Linearpolarisatoren 27.2, 27.3 jeweils herausgefilterten elektromagnetischen Strahlung weist der Strahlungsdetektor 9 für jeden zweiten Linearpolarisator 27.2, 27.3 eine Detektionseinheit 10.1, 10.2 zur Erfassung der Strahlungsleistung auf. Beispielsweise weisen die Detektionseinheiten 10.1, 10.2 jeweils wenigstens eine Photodiode auf.

Der Strahlungsdetektor 9 kann ferner für jede Detektionseinheit 10.1, 10.2 eine Verstärker- und/oder Filtereinheit 25.1, 25.2 zum Verstärken und/oder Filtern der von der Detektionseinheit 10.1, 10.2 erfassten Signale aufweisen.

Die von den Detektionseinheiten 10.1, 10.2 erfassten Signale werden, gegebenenfalls über die Verstärker- und/oder Filtereinheit 25.1, 25.2, der Auswerteeinheit 19 zugeführt und von dieser ausgewertet. Vorzugsweise normalisiert die Auswerteeinheit 19 die ihr zugeführten Signale, um Umgebungseinflüsse wie Temperatur- oder Feuchtigkeitseinflüsse oder Einflüsse einer Abnutzung von Torsionssensorkomponenten auf die Signale zu reduzieren. Beispielsweise werden die Signale normalisiert, indem jeweils die Summe der für die beiden zweiten Linearpolarisatoren 27.2, 27.3 erfassten Signale durch eine Differenz dieser Signale dividiert wird. Das Torsionsmoment wird von der Auswerteeinheit 19 aus den (gegebenenfalls normalisierten) Signalen ermittelt.

Die Auswerteeinheit 19 kann als analoge Einheit zur analogen Auswertung der Signale oder als digitale Einheit zur digitalen Auswertung der Signale ausgeführt sein. Im Fall, dass sie als digitale Einheit ausgeführt ist, werden die Signale vor ihrer Auswertung durch einen Analog-Digital-Umsetzer digitalisiert.

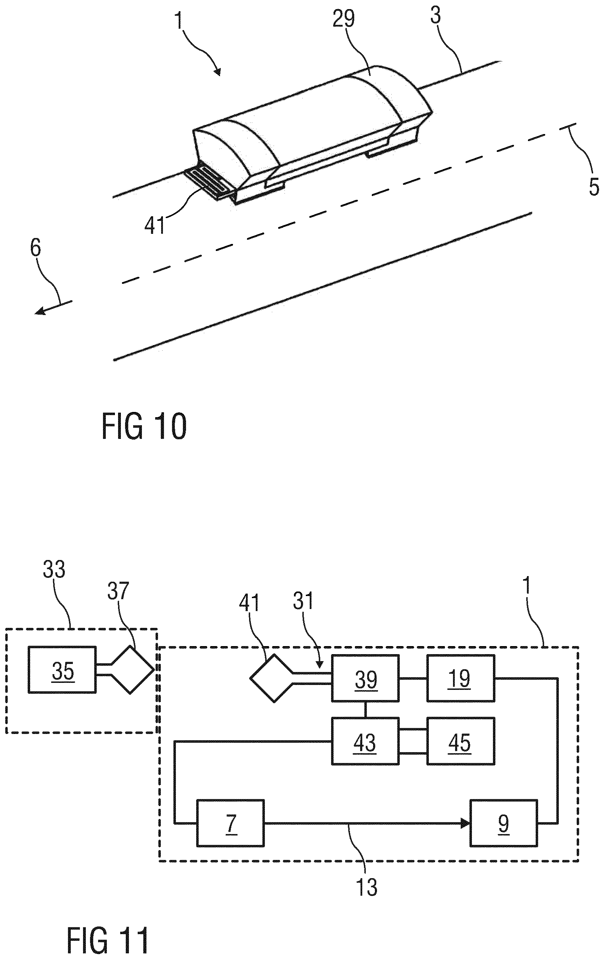

Die Figuren 10 und 11 zeigen ein viertes Ausführungsbeispiel eines Torsionssensors 1 zum Bestimmen eines auf ein Objekt 3 wirkenden Torsionsmoments. Figur 10 zeigt eine perspektivische Darstellung und Figur 11 zeigt ein Blockdiagramm des Torsionssensors 1. Der Torsionssensor 1 weist eine Strahlungsquelle 7, einen Strahlungsdetektor 9, ein Gehäuse 29 und ein kabelloses Übertragungssystem 31 auf.

Die Strahlungsquelle 7, der Strahlungsdetektor 9 und das Objekt 3 sind wie in einem der in den Figuren 1 bis 9 gezeigten Ausführungsbeispiele ausgebildet und werden daher hier nicht noch einmal beschrieben.

Das Gehäuse 29 umgibt die Strahlungsquelle 7 und den Strahlungsdetektor 9 und ist an einer Außenoberfläche des Objekts 3 angeordnet. Zumindest ein Bereich des Gehäuses 29, in dem das von der Strahlungsquelle 7 abgestrahlte Strahlungsbündel 13 verläuft, kann mit einem für die von der Strahlungsquelle 7 abgestrahlte elektromagnetische Strahlung durchlässigen Gel befüllt sein, um Staub, kleine Partikel und kleine Teile, die sich von dem Torsionssensor 1, beispielsweise infolge von Abnutzung, lösen, von dem Strahlungsbündel 13 fernzuhalten.

Das kabellose Übertragungssystem 31 ist zum kabellosen Senden von Messdaten, die von dem Strahlungsdetektor erfasst werden, zu einer externen Sende- und Empfangseinheit 33 und zum kabellosen Empfangen von Energie von der Sende- und Empfangseinheit 33 ausgebildet. Die Sende- und Empfangseinheit 33 umfasst eine erste Transceivereinheit 35 und eine erste Antenneneinheit 37 mit wenigstens einer Antenne.

Das kabellose Übertragungssystem 31 ist in oder an oder teilweise in und teilweise an dem Gehäuse 29 angeordnet. Das kabellose Übertragungssystem 31 umfasst eine zweite Transceivereinheit 39 und eine zweite Antenneneinheit 41 mit wenigstens einer Antenne.

Ferner weist der Torsionssensor 1 eine in dem Gehäuse 29 angeordnete Energieversorgungseinheit 43 sowie optional eine Energiespeichereinheit 45 auf. Die Energieversorgungseinheit 43 versorgt andere Komponenten des Torsionssensors 1 mit elektrischer Energie. Der Energieversorgungseinheit 43 wird von der zweiten Transceivereinheit 39 Energie zugeführt, die von der Sende- und Empfangseinheit 33 in Form elektromagnetischer Strahlung, die von der zweiten Antenneneinheit 41 empfangen wird, zu dem Torsionssensor 1 übertragen wird. Die optionale Energiespeichereinheit 45 dient der Speicherung von Energie.

In allen hier beschriebenen Ausführungsbeispielen kann die Strahlungsquelle 7 insbesondere als eine Lichtquelle ausgeführt sein, die sichtbares Licht abstrahlt.

### Bezugszeichenliste

- 1: Drehgeber
- 3: Objekt
- 5: Längsachse
- 6: Torsionsmomentrichtung
- 7: Strahlungsquelle
- 9: Strahlungsdetektor
- 9.1 bis 9.n: Detektorfläche
- 10.1 bis 10.n: Detektionseinheit
- 13: Strahlungsbündel
- 17: Auftreffbereich
- 19: Auswerteeinheit
- 21: Strahlungsemissionseinheit
- 23: Versorgungseinheit
- 25: Prozessoreinheit
- 25.1, 25.2: Verstärker- und/oder Filtereinheit
- 27.1, 27.2, 27.3: Linearpolarisator
- 29: Gehäuse
- 31: kabelloses Übertragungssystem
- 33: Sende- und Empfangseinheit
- 35, 39: Transceivereinheit
- 37, 41: Antenneneinheit
- 43: Energieversorgungseinheit
- 45: Energiespeichereinheit

## Patentansprüche

1. Torsionssensor (1) zum Bestimmen eines auf ein Objekt (3) wirkenden Torsionsmoments, der Torsionssensor (1) umfassend
- eine Strahlungsquelle (7) und einen Strahlungsdetektor (9), die voneinander beabstandet an dem Objekt (3) angeordnet sind, wobei
- die Strahlungsquelle (7) ein Strahlungsbündel (13) elektromagnetischer Strahlung zu dem Strahlungsdetektor (9) abstrahlt
- und der Strahlungsdetektor (9) wenigstens eine von einem Auftreffbereich (17), in dem das Strahlungsbündel (13) den Strahlungsdetektor (9) trifft, abhängige Messgröße erfasst.

2. Torsionssensor (1) nach Anspruch 1,
**dadurch gekennzeichnet, dass** die Strahlungsquelle (7) das Strahlungsbündel (13) in eine Strahlungsrichtung abstrahlt, die zumindest annähernd parallel zu einer Torsionsmomentrichtung (6) des Torsionsmoments ist.

3. Torsionssensor (1) nach Anspruch 1 oder 2,
**dadurch gekennzeichnet, dass** der Strahlungsdetektor (9) zwei nebeneinander angeordnete Detektorflächen (9.1, 9.2) aufweist, die mit dem Strahlungsbündel (13) bestrahlt werden, wobei ein Anteil des Strahlungsbündels (13), der eine Detektorfläche (9.1, 9.2) trifft, von der Torsion des Objekts (3) abhängt, und dass der Strahlungsdetektor (9) für jede Detektorfläche (9.1, 9.2) eine Strahlungsleistung des auf die Detektorfläche (9.1, 9.2) auftreffenden Anteils des Strahlungsbündels (13) erfasst.

4. Torsionssensor (1) nach Anspruch 1 oder 2,
**dadurch gekennzeichnet, dass** der Strahlungsdetektor (9) eine Vielzahl nebeneinander angeordneter Detektorflächen (9.1 bis 9.n) aufweist und das Strahlungsbündel (13) eine von der Torsion des Objekts (3) abhängige Untermenge der Detektorflächen (9.1 bis 9.n) trifft, und dass der Strahlungsdetektor (9) die von dem Strahlungsbündel (13) getroffene Untermenge der Detektorflächen (9.1 bis 9.n) erfasst.

5. Torsionssensor (1) nach Anspruch 4,
**dadurch gekennzeichnet, dass** der Strahlungsdetektor (9) für jede Detektorfläche (9.1 bis 9.n) erfasst, ob eine Strahlungsleistung der auf die Detektorfläche (9.1 bis 9.n) auftreffenden elektromagnetischen Strahlung einen vorgegebenen Leistungsschwellenwert überschreitet.

6. Torsionssensor (1) nach Anspruch 1 oder 2,
**dadurch gekennzeichnet, dass** die elektromagnetische Strahlung des Strahlungsbündels (13) linear polarisiert ist und der Strahlungsdetektor (9) zwei voneinander beabstandete Linearpolarisatoren (27.2, 27.3) aufweist, die sich voneinander durch die Polarisationsrichtungen der von ihnen herausgefilterten elektromagnetischen Strahlung unterscheiden und von dem Strahlungsbündel (13) bestrahlt werden, und dass der Strahlungsdetektor (9) für jeden Linearpolarisator (27.2, 27.3) eine Strahlungsleistung der von dem Linearpolarisator (27.2, 27.3) herausgefilterten elektromagnetischen Strahlung erfasst.

7. Torsionssensor (1) nach Anspruch 6,
**dadurch gekennzeichnet, dass** sich die Polarisationsrichtungen der von den Linearpolarisatoren (27.2, 27.3) herausgefilterten elektromagnetischen Strahlung um 90 Grad voneinander unterscheiden.

8. Torsionssensor (1) nach einem der vorhergehenden Ansprüche,
**gekennzeichnet durch** ein Gehäuse (29), das die Strahlungsquelle (7) und den Strahlungsdetektor (9) umgibt.

9. Torsionssensor (1) nach Anspruch 8,
**dadurch gekennzeichnet, dass** zumindest ein Bereich des Gehäuses (29), in dem das Strahlungsbündel (13) verläuft, mit einem für die von der Strahlungsquelle (7) abgestrahlten elektromagnetischen Strahlung durchlässigen Gel befüllt ist.

10. Torsionssensor (1) nach einem der vorhergehenden Ansprüche,
**gekennzeichnet durch** ein kabelloses Übertragungssystem (31) zum kabellosen Senden von Messdaten, die von dem Strahlungsdetektor (9) erfasst werden, zu einer externen Empfangseinheit (33) und/oder zum kabellosen Empfangen von Energie von einer externen Energiequelle (33).

11. Verfahren zum Bestimmen eines auf ein Objekt (3) wirkenden Torsionsmoments mit einem gemäß einem der vorhergehenden Ansprüche ausgebildeten Torsionssensor (1), wobei
- von der Strahlungsquelle (7) des Torsionssensors (1) ein Strahlungsbündel (13) elektromagnetischer Strahlung zu dem Strahlungsdetektor (9) des Torsionssensors (1) abgestrahlt wird,
- von dem Strahlungsdetektor (9) wenigstens eine von dem Auftreffbereich (17), in dem das Strahlungsbündel (13) den Strahlungsdetektor (9) trifft, abhängige Messgröße erfasst wird und
- anhand der wenigstens einen Messgröße das auf das Objekt (3) wirkende Torsionsmoment bestimmt wird.
